# EUROPÄISCHE PATENTANMELDUNG

(11) **EP 4 257 514 A1**
(43) Veröffentlichungstag der Anmeldung: **11.10.2023**
(21) Anmeldenummer: 22166540.9
(22) Anmeldetag: 04.04.2022
(51) Int. Cl.: B65D 85/57, B65D 5/32, G11B 33/04, B65D 5/50, B65D 5/355

(54) **VERPACKUNG FÜR EINE SCHALLPLATTE, INSBESONDERE ZUM VERSAND**

(71) Anmelder: canvas&frame GmbH, 10245 Berlin (DE)
(72) Erfinder: BOECKER, Matthias, 10179 Berlin (DE)
(74) Vertreter: Michalski Hüttermann & Partner Patentanwälte mbB

(57) **Zusammenfassung**

Faltverpackung (1.1, 1.2) zum Transport von Schallplatten (29), umfassend ein inneres Verpackungselement (2) und ein äußeres Verpackungselement (15), wobei das innere Verpackungselement (2) aufweist: eine rechteckige erste Grundplatte (3.1), eine erste Lasche (5.1), eine zweite Lasche (5.2), eine dritte Lasche (5.2), und eine vierte Lasche (5.4); wobei das äußere Verpackungselement (15) aufweist: eine rechteckige zweite Grundplatte (3.2), eine fünfte Lasche (5.5), und eine sechste Lasche (5.6), wobei die erste Grundplatte (3.1) und die zweite Grundplatte (3.2) aufeinander flächig aufliegen und miteinander verbunden sind, wobei die Laschen (5.1, 5.2, 5.3, 5.4, 5.5, 5.6) mit den zugeordneten Grundplatten (3.1, 3.2) Falze bilden, und wobei das äußere Verpackungselement (15) in einem geschlossenen Zustand dazu vorgesehen ist, das geschlossene innere Verpackungselement (2) zu umschließen.

## Beschreibung

### Technisches Gebiet

Die vorliegende Erfindung betrifft eine Faltverpackung zum Transport von Schallplatten, insbesondere zum Versand von Schallplatten mittels einem Paketdienst. Die Erfindung betrifft weiterhin zwei Faltverpackungssysteme jeweils mit einer solchen Faltverpackung.

### Hintergrund der Erfindung

Faltverpackungen zum Versand von Transportgut sind aus dem Stand der Technik bereits bekannt. So werden beispielsweise zum Versand von Büchern, CDs und anderen in sich ausreichend starren Gütern regelmäßig Karton-Verpackungen genutzt, die das Transportgut mittels mehrerer flächiger, zueinander faltbarer Verpackungsteile umschließen, wobei im Inneren Laschen oder Ausschnitte vorgesehen sind, mittels denen das Transportgut in einer Position fixiert wird. Derartige Verpackungen sind jedoch nicht für Schallplatten geeignet, die einerseits aus einem nicht starren Cover, beispielsweise aus dünnem Karton, und einer darin einliegenden Vinylscheibe gebildet sind, da insbesondere das Cover an über der Vinylscheibe hinausragenden Ecken geknickt werden kann.

Im Stand der Technik sind daher spezielle Verpackungen für Schallplatten bekannt, die zumeist eine Fixierung der Vinylplatte und gleichzeitig einen Schutz des Covers bewirken sollen. Diese Verpackungen bieten aber oft keinen befriedigenden Schutz gegen einen üblichen groben Umgang durch einen Paketdienst. Eine Schallplattenverpackung ist beispielsweise aus DE 8813972 U1 bekannt.

Um bei solchen oder anderen, nicht speziell für Schallplatten vorgesehenen, Verpackungen zu einer ausreichenden Sicherung der Schallplatte/n gegen Beschädigung zu gelangen, ist es nachteilig nötig, beim Verpacken zusätzliches Schutzmaterial zur Versteifung, Fixierung und/oder Polsterung einzusetzen, was mit unerwünschtem Aufwand verbunden ist.

### Beschreibung der Erfindung

Ausgehend von dieser Situation und insbesondere mit Blick auf die stark zunehmende Beliebtheit von Schallplatten und den allgemeinen Trend zum Versandhandel ist es eine Aufgabe der vorliegenden Erfindung, eine Verpackung für Schallplatten zur Verfügung zu stellen, die einen befriedigenden Schutz beim Transport, insbesondere beim Versand, einer Schallplatte oder mehrerer Schallplatten bieten und einfach zu handhaben ist.

Die Aufgabe der Erfindung wird durch die Merkmale der unabhängigen Hauptansprüche gelöst. Vorteilhafte Ausgestaltungen sind in den Unteransprüchen angegeben. Sofern technisch möglich, können die Lehren der Unteransprüche beliebig mit den Lehren der Haupt- und Unteransprüche kombiniert werden.

Nach einem ersten Aspekt der Erfindung wird die Aufgabe gelöst durch eine Faltverpackung zum Transport von Schallplatten, umfassend ein inneres Verpackungselement und ein äußeres Verpackungselement, wobei das innere Verpackungselement aufweist:
- eine rechteckige erste Grundplatte,
- eine mit einer ersten Kante der ersten Grundplatte verbundene erste Lasche,
- eine mit einer der ersten Kante der ersten Grundplatte gegenüberliegenden zweiten Kante der ersten Grundplatte verbundene zweite Lasche,
- eine mit einer dritten Kante der ersten Grundplatte verbundene dritte Lasche, und
- eine mit einer der dritten Kante der ersten Grundplatte gegenüberliegenden vierten Kante der ersten Grundplatte verbundene vierte Lasche,

wobei das äußere Verpackungselement aufweist:
   - eine rechteckige zweite Grundplatte,
   - eine mit einer ersten Kante der zweiten Grundplatte verbundene fünfte Lasche, und
   - eine mit einer der ersten Kante der zweiten Grundplatte gegenüberliegenden zweiten Kante der zweiten Grundplatte verbundene sechste Lasche,
wobei die erste Grundplatte und die zweite Grundplatte aufeinander flächig aufliegen und miteinander verbunden sind, wobei die Laschen mit den zugeordneten Grundplatten Falze bilden und zum Umschließen der Schallplatte/n auf die Grundplatten faltbar sind, und wobei das äußere Verpackungselement in einem geschlossenen Zustand dazu vorgesehen ist, das geschlossene innere Verpackungselement zu umschließen.

Nachfolgend werden Vorteile der beanspruchten Erfindungsaspekte erläutert und weiter nachfolgend bevorzugte modifizierte Ausführungsformen der Erfindungsaspekte beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

Soweit Elemente mit Hilfe einer Nummerierung bezeichnet sind, also beispielsweise "erstes Bauteil", "zweites Bauteil" und "drittes Bauteil", so ist diese Nummerierung rein zur Differenzierung in der Bezeichnung vorgesehen und stellt keine Abhängigkeit der Elemente voneinander oder eine zwingende Reihenfolge der Elemente dar. Das heißt insbesondere, dass eine Vorrichtung nicht ein "erstes Bauteil" aufweisen muss, um ein "zweites Bauteil" aufweisen zu können. Auch kann die Vorrichtung ein "erstes Bauteil", sowie ein "drittes Bauteil" umfassen, ohne aber zwangsläufig ein "zweites Bauteil" aufzuweisen. Es können auch mehrere Einheiten eines Elements einer einzelnen Nummerierung vorgesehen sein, also beispielsweise mehrere "erste Bauteile".

Als Schallplatte wird ein mehrteiliges Erzeugnis umfassend eine mit Daten beschriebene runde Vinylplatte und ein zum Umhüllen der Vinylplatte vorgesehenes rechteckiges, insbesondere quadratisches, Cover verstanden. Dem Cover kommt dabei regelmäßig ein besonderer Wert, insbesondere ein besonderer Sammelwert, zu, da es zumeist aufwändig gestaltet ist und somit die auf der Vinylplatte gespeicherten Daten, insbesondere die dort gespeicherte Musik, künstlerisch begleitet. Das Cover kann zudem auch mit Informationen wie Inhaltsangaben zu den auf der Vinylplatte gespeicherten Daten bedruckt sein. Das Cover ist üblicherweise aus Papier oder dünnem Karton ausgebildet und weist in sich nur eine geringe Stabilität auf. Insbesondere ist das Cover anfällig dafür, geknickt zu werden, etwa an über der Vinylplatte hinausragenden Ecken. Die Vinylplatte weist in sich eine gewisse Stabilität sowie Elastizität auf, ist jedoch durch ihre Beschaffenheit beim Versand nicht ausreichend vor Beschädigung geschützt. Neben der Gefahr einer Bruchbeschädigung besteht auch die Gefahr eines Verkratzens insbesondere der die Daten tragenden Oberfläche der Vinylplatte. Der Begriff Vinylplatte wird hier auch stellvertretend für Platten aus bekannten alternativen Materialien verstanden, wie etwa Schellackplatten, wobei Vinyl (Polyvinylchlorid - PVC) heutzutage ausschließlich für die Herstellung von Schallplatten verwendet wird. Schallplatten weisen ferner regelmäßig Kunststoff- oder Papierhüllen, sogenannte Innenhüllen, auf, die zusätzlich um die Vinylplatte gelegt werden, um die Vinylplatte vor Verkratzen durch die Innenseite des Covers zu schützen.

Sowohl Grundplatten als auch Laschen sind als flächige Elemente ausgebildet, weisen also in zwei Raumdimensionen deutlich größere Ausdehnungen auf als in einer dritten Raumdimension und bilden insofern zwei Flächen und sich zwischen den Flächen erstreckende Kanten aus. Insofern die erste und die zweite Grundplatte flächig aneinander anliegen, sind jeweilige Flächen der Grundplatten einander zugewandt und berühren sich. Eine Verbindung ist an einer so gebildeten Kontaktfläche ausgebildet, beispielsweise durch Verkleben. Insofern eine Lasche mit einer Kante verbunden ist, ist die Lasche insbesondere einstückig an der Kante angeformt. Eine Falz ist dann beispielsweise durch Eindrücken oder Perforieren des Materials entlang der Kante gebildet.

Die Faltverpackung, bzw. ein jeweiliges Verpackungselement ist dazu vorgesehen, einen umschlossenen Raum auszubilden, in dem Transportgut zum Transport aufgenommen wird. Im Fall des inneren Verpackungselements ist das Transportgut eine oder mehrere Schallplatte/n, im Falle des äußeren Verpackungselements ist das Transportgut das innere Verpackungselement mit darin angeordneter Schallplatte bzw. angeordneten Schallplatten. Dabei werden die Laschen in einem geöffneten Zustand eines jeweiligen Verpackungselements aufgeklappt, sodass sie nicht über der jeweiligen Grundplatte liegen, sondern sich seitlich von der jeweiligen Grundplatte weg erstrecken, wobei dann der zu umschließende Raum zum Einlegen oder Entnehmen von Transportgut geöffnet ist. Sobald Transportgut auf einer Grundplatte platziert ist, werden die Laschen insbesondere in einer vorgegebenen Reihenfolge auf die Grundplatten bzw. auf das Transportgut geklappt und schließen das Transportgut so in dem umschlossenen Raum ein. Die Falze sind dann seitlich des Transportguts angeordnet und umgreifen dieses. Die Laschen bilden dann mit der zugeordneten Grundplatte einen geschlossene Zustand des jeweiligen Verpackungselements, wobei dieser geschlossene Zustand besonders bevorzugt durch Befestigungsmittel für den Versand aufrechterhalten wird.

Im Sinne der vorliegenden Erfindung wird als Polsterung verstanden, dass ein Transportgut von einem Material umgeben ist, das bei einer Stoß- und anderweitigen Druckbelastung Verformungsenergie aufnimmt und so das Transportgut vor einer Krafteinwirkung schützt. Als Fixierung wird ein Halten des Transportguts verstanden, mittels dem verhindert wird, dass das Transportgut innerhalb der Faltverpackung bei einer äußeren Beschleunigung verrutschen kann. Als Versteifung wird verstanden, dass mittels der Verpackung eine Biegelast aufgenommen wird, um ein Biegen oder Knicken des Transportguts zu verhindern.

Der erste Aspekt der Erfindung umfasst nun die Lehre, dass die Faltverpackung aus einem inneren Verpackungselement und einem äußeren Verpackungselement gebildet ist. Dabei ist das innere Verpackungselement dazu vorgesehen, die Schallplatte/n derart zu fixieren, dass weder das Cover noch die Vinylplatte über ein tolerierbares Maß hinaus verrutschen können. Durch die vier Laschen des inneren Verpackungselement wird ein allseitige Umschließen der Schallplatte/n erreicht, durch die diese Fixierung erreicht wird. Besonders bevorzugt weist dabei die erste Grundplatte in ihrer Fläche die Abmaße einer üblichen Schallplatte auf oder überragt dieses Maß gerade so, dass die Falze der Laschen in dem geschlossenen Zustand des inneren Verpackungselements an Kanten der Schallplatte/n anliegen oder die Schallplatte/n nur ein geringes Spiel gegenüber den Falzen haben. Ein übliches Abmaß für eine Schallplatte ist etwa ca. 31,5 cm für eine 12 Zoll-Vinylplatte oder ca. 18,5 cm für eine 7 Zoll-Vinylplatte. Durch das innere Verpackungselement ist weiterhin bereits eine Polsterung sowie eine Versteifung der Schallplatte/n erreicht.

Der erste Aspekt der Erfindung umfasst weiterhin die Lehre, dass mittels des das innere Verpackungselement umschließenden äußere Verpackungselements ein zusätzlicher Schutz, insbesondere eine zusätzliche Polsterung und eine zusätzliche Versteifung der Schallplatte/n geschaffen ist, die in Kombination mit dem inneren Verpackungselement letztlich zu einem ausreichenden Schutz der Schallplatte/n führt. Durch das Verbinden der ersten und der zweiten Grundplatte wird dabei eine einfach zu handhabende Faltverpackung geschaffen, die vorteilhaft aus einer einzelnen Gesamtheit gebildet ist. Ein Falten der fünften Lasche und der sechsten Lasche erfolgt dann auf einfache Weise, wenn das innere Verpackungselement geschlossen ist. Dabei kann durch eine größere Dimensionierung des von dem äußeren Verpackungselement umschlossenen Raums gegenüber den Außenmaßen des geschlossenen inneren Verpackungselements insbesondere eine oder mehrere Knautschzone/n geschaffen werden, durch die das innere Verpackungselement zusätzlich geschützt ist, insbesondere gegenüber einem Sturz der Faltverpackung. Zum Ausbilden der genannten Schutzfunktion des äußeren Verpackungselements reicht es aus, dieses auf einfache Weise mit zwei Laschen auszubilden.

In einer besonders bevorzugten Ausführungsform ist in dem inneren Verpackungselement ein Fixiermittel zum Fixieren einer Schallplatte oder mehrerer Schallplatten befestigt, insbesondere verklebt, wobei sich das Fixiermittel über die erste Grundplatte, die erste Lasche und die zweite Lasche erstreckt und zum Umgreifen der Schallplatte oder Schallplatten vorgesehen ist. Beispielsweise ist das Fixiermittel als Strukturpappe, insbesondere Wellpappe, oder als Luftpolsterfolie ausgebildet. Durch ein solches Fixiermittel wird eine besonders sichere Fixierung der Schallplatte in dem inneren Verpackungselement erreicht, indem die Schallplatte an Kanten in die Oberfläche des Fixiermittels eingreift oder leicht eingedrückt wird und so gehalten wird. Durch das Befestigen des Fixiermittels muss dieses beim Verpacken von einer oder mehrerer Schallplatte/n nicht erst in die Faltverpackung eingelegt werden, sodass die Faltverpackung besonders einfach zu handhaben ist. Bevorzugt ist die Stärke des Fixiermittels bei der Dimensionierung der Grundplatte berücksichtigt, sodass die Schallplatte in dem Fixiermittel fixiert ist, ohne beschädigt zu werden. Das Fixiermittel erzielt ferner bereits eine gewünscht Wirkung, wenn es sich nur über zwei einander gegenüberliegende Laschen des inneren Verpackungselements und die Grundplatte erstreckt. Eine Erstreckung über alle vier Laschen des inneren Verpackungselements ist nicht notwendig, jedoch ebenfalls als Ausführungsform des ersten Erfindungsaspekts möglich.

Bevorzugt ist das Fixiermittel an der ersten Bodenplatte befestigt. Die erste Bodenplatte eignet sich zu diesem Zweck besonders gut, da sie beim Schließen des inneren Verpackungselements nicht bewegt wird und insofern einen feststehenden Befestigungspunkt für das Fixiermittel bietet. Das Fixiermittel liegt dabei bevorzugt auf der ersten Lasche und der zweiten Lasche lediglich lose auf, sodass es beim Schließen des inneren Verpackungselements gegenüber den Laschen verschiebbar ist und kein Verspannen der Laschen und des Fixiermittels gegeneinander erfolgt.

In einer Ausführungsform bilden zumindest zwei sich gegenüberliegende Laschen, insbesondere zumindest die fünfte Lasche und die sechste Lasche, mit den zugeordneten Grundplatten Doppelfalze, wobei zwischen zwei parallelen Falzkanten der Doppelfalze eine Seitenfläche des zugeordneten Verpackungselements ausgebildet ist. Das geschlossene äußere Verpackungselement weist dann eine Höhe auf, die der Höhe der Seitenflächen entspricht, sodass ein ausreichend hoher umschlossener Raum zur Aufnahme des inneren Verpackungselements entsteht. Insbesondere weist ein so geschaffenes äußeres Verpackungselement eine gewisse Toleranz gegenüber unterschiedlichen Höhen des geschlossenen inneren Verpackungselements auf, etwa wenn verschiedene Anzahlen von Schallplatten verpackt werden. Die zweite Grundplatte und die fünfte Lasche sowie die zweite Grundplatte und die sechste Lasche sind dann je nach Anzahl der Schallplatten im geschlossenen Zustand des äußeren Verpackungselements nicht gänzlich parallel zueinander angeordnet.

Besonders bevorzugt ist das innere Verpackungselement und/oder das äußere Verpackungselement jeweils aus Pappe ausgebildet. Pappe ist vorteilhaft leicht und bietet ausreichende Schutzeigenschaften, insbesondere eine ausreichende Polsterung und Versteifung. Pappe ist zudem umweltschonend recyclebar.

Weiterhin bevorzugt ist die erste Grundplatte mit der zweiten Grundplatte verklebt. Auf diese Weise wird eine besonders einfache und günstige, jedoch gleichfalls stabile Verbindung des inneren Verpackungselements mit dem äußeren Verpackungselement geschaffen.

In einer Ausführungsform sind die erste Lasche und die zweite Lasche als gegenüber der dritten Lasche und der vierten Lasche als innenliegende Laschen ausgebildet. Die erste Lasche und die zweite Lasche sind also dazu vorgesehen, beim Schließen des inneren Verpackungselements zuerst auf die Grundplatte gefaltet zu werden, wobei anschließend die dritte Lasche und die vierte Lasche über die erste Lasche und die zweite Lasche gefaltet werden. Die dritte Lasche und die vierte Lasche weisen insbesondere eine bezüglich des äußeren Verpackungselements vorbeschriebene Doppelfalz auf, sodass eine entstehende Seitenfläche ausreicht, um die erste Lasche und die zweite Lasche in der Hochrichtung zu überragen. Insbesondere können die erste Lasche und die zweite Lasche und/oder die dritte Lasche und die vierte Lasche sich auch gegenseitig im geschlossenen Zustand überlappen.

In einer weiteren Ausführungsform liegen sich die erste Lasche und die zweite Lasche in einer ersten Richtung gegenüber, wobei die fünfte Lasche und die sechste Lasche sich ebenfalls in der ersten Richtung gegenüberliegen. Insbesondere, wenn die dritte Lasche und die vierte Lasche im geschlossenen Zustand des inneren Verpackungselements über der ersten Lasche und der zweite Lasche liegen, ist so eine abwechselnde Faltrichtung der Laschen beim Schließen der Faltverpackung erreicht, durch die die Faltverpackung besonders stabil und sicher ausgebildet wird.

Besonders bevorzugt ragt dabei die zweite Grundplatte in der ersten Richtung und/oder in einer senkrecht zur ersten Richtung verlaufenden zweiten Richtung jeweils beidseitig über die erste Grundplatte hinaus. Auf diese Weise sind im geschlossenen Zustand des äußeren Verpackungselements durch die Überstände Knautschzonen geschaffen, sodass die Schallplatte/n besonders gut gegen Stoß- oder anderweitige Druckbelastungen geschützt ist bzw. sind.

Besonders bevorzugt weist die zweite Grundplatte, die fünfte Lasche und/oder die sechste Lasche jeweils an sich in der zweiten Richtung gegenüberliegenden Kanten Versteifungen auf, sodass durch Überstände des äußeren Verpackungselements über dem inneren Verpackungselement in der zweiten Richtung besonders stabile Knautschzonen geschaffen sind, um bei eine Stoß- oder Druckbelastung besonders viel Verformungsenergie aufzunehmen. Eine solche Versteifung kann beispielsweise durch eine umgefaltete Kante erzeugt werden.

In einer Ausführungsform weisen zumindest die erste Lasche und die zweite Lasche jeweils eine Mehrfachfalz mit mehreren zueinander parallelen Falzkanten zum wahlweisen Ausbilden verschieden hoher Seitenflächen des inneren Verpackungselements auf. Die dritte Lasche und die vierte Lasche sowie die fünfte Lasche und die sechste Lasche können ebenfalls mehrere derartig ausgebildete Falzkanten aufweisen oder eine Doppelfalz aufweisen, sodass eine Seitenfläche mit einer führ mehrere Höhen passenden Dimensionierung entsteht. Vorteilhaft kann die Faltverpackung auf diese Weise zum Transport einer einzelnen Schallplatte oder mehrerer Schallplatten gleichermaßen ausgebildet werden, wobei die hier beschriebenen Vorteile unabhängig von der Anzahl der Schallplatten erreicht werden.

Weiterhin bevorzugt weist die zweite Lasche, die vierte Lasche und/oder die sechste Lasche jeweils ein Befestigungsmittel zum Verschließen des inneren Verpackungselements oder des äußeren Verpackungselements auf, wobei das Befestigungsmittel insbesondere jeweils mittels eines Abrisses von der zweiten Lasche, der vierten Lasche oder der sechsten Lasche abtrennbar ausgebildet ist. Zum Verschließen der Faltverpackung ist dann kein Zusätzliches Befestigungsmaterial wie Packband oder Klebeband nötig, sodass eine besonders einfach zu handhabende Verpackung geschaffen ist. Durch den Abriss ist die Faltverpackung besonders einfach zu öffnen und verbleibt dabei in einem Zustand, in dem sie für einen weiteren Transport nochmals verschlossen werden kann, beispielsweise mittels weiteren, an den Laschen vorgesehenen Befestigungsmitteln oder mittels zusätzlich aufzuwendendem Befestigungsmaterial wie Paketband oder Klebeband.

Ein zweiter Aspekt der Erfindung betrifft ein Faltverpackungssystem mit einer vorbeschriebenen Faltverpackung und zumindest einem in dem inneren Verpackungselement einlegbaren Fixiermittel zum Fixieren einer Schallplatte oder mehrerer Schallplatten, wobei das Fixiermittel dazu vorgesehen ist, sich über die erste Grundplatte, die erste Lasche und die zweite Lasche zu erstrecken und die Schallplatte oder Schallplatten zu umgreifen. Das Fixiermittel weist dabei die gleichen Vorteile auf, die bereits bezüglich einem in dem inneren Verpackungselement befestigten Fixiermittel beschrieben wurden. Dadurch, dass das Fixiermittel hier nicht an dem inneren Verpackungselement befestigt ist, entsteht der Vorteil, dass beim Verpacken von Schallplatten wahlweise entschieden werden kann, ob das Fixiermittel benötigt wird, oder nicht. Das Fixiermittel kann ferner ein Befestigungsmittel wie etwa einen Klebepunkt oder Klebestreifen aufweisen, mittels dem es an der ersten Grundplatte befestigbar ist.

Ein dritter Aspekt der Erfindung betrifft ein Faltverpackungssystem mit einer vorbeschriebenen Faltverpackung und zumindest einen Einlegeboden zum Unterlegen oder Überdecken von einer oder mehreren in dem inneren Verpackungselement eingelegten Schallplatte oder Schallplatten. Ein solcher Einlegeboden ist beispielsweise durch eine möglichst steife Pappe in den Abmaßen einer Schallplatte oder in etwas größeren Abmaßen als eine Schallplatte aufweist gebildet und wird vor oder nach dem Einlegen der Schallplatte/n in das geöffnete innere Verpackungselement unter oder über der Schallplatte bzw. den Schallplatten platziert. Durch den Einlegeboden oder mehrere Einlegeböden wird vorteilhaft eine weitere Versteifung der Faltverpackung erreicht, durch die die Faltverpackung bzw. die Schallplatte/n zusätzlich vor einem Knicken oder Durchbiegen geschützt werden.

### Kurze Beschreibung der Zeichnungen

Nachfolgend wird die Erfindung unter Bezugnahme auf die anliegenden Zeichnungen anhand bevorzugter Ausführungsbeispiele näher erläutert. Die Formulierung Figur ist in den Zeichnungen mit Fig. abgekürzt.

In den Zeichnungen zeigen
- Fig. 1: eine Ansicht eines geöffneten inneren Verpackungselements einer Faltverpackung nach einer Ausführungsform des ersten Aspekts der Erfindung;
- Fig. 2: eine Ansicht eines geöffneten äußeren Verpackungselements einer Faltverpackung nach der Ausführungsform gemäß Fig. 1 des ersten Aspekts der Erfindung;
- Fig. 3: eine Ansicht einer Faltverpackung in geöffnetem Zustand nach der Ausführungsform gemäß Fig. 1 und Fig. 2 des ersten Aspekts der Erfindung, umfassend ein inneres Verpackungselement und ein äußeres Verpackungselement;
- Fig. 4: eine Ansicht einer Faltverpackung in geöffnetem Zustand nach einer weiteren Ausführungsform des ersten Aspekts der Erfindung, umfassend ein inneres Verpackungselement und ein äußeres Verpackungselement;
- Fig. 5: eine Querschnittsansicht durch eine Faltverpackung nach Fig. 4;
- Fig. 6: eine Ansicht eines Fixiermittels für eine Faltverpackung nach dem ersten Erfindungsaspekt oder dem zweiten Erfindungsaspekt; und
- Fig. 7: eine Ansicht eines Einlegebodens für eine Faltverpackung nach dem dritten Erfindungsaspekt.

### Detaillierte Beschreibung der Ausführungsbespiele

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wird, kann eigenständig oder in Kombination mit anderen Merkmalen in einem beliebigen anderen Ausführungsbeispiel genutzt werden. Jedes Merkmal, das für ein Ausführungsbeispiel einer bestimmten Anspruchskategorie beschrieben wird, kann auch in entsprechender Weise in einem Ausführungsbeispiel einer anderen Anspruchskategorie eingesetzt werden.

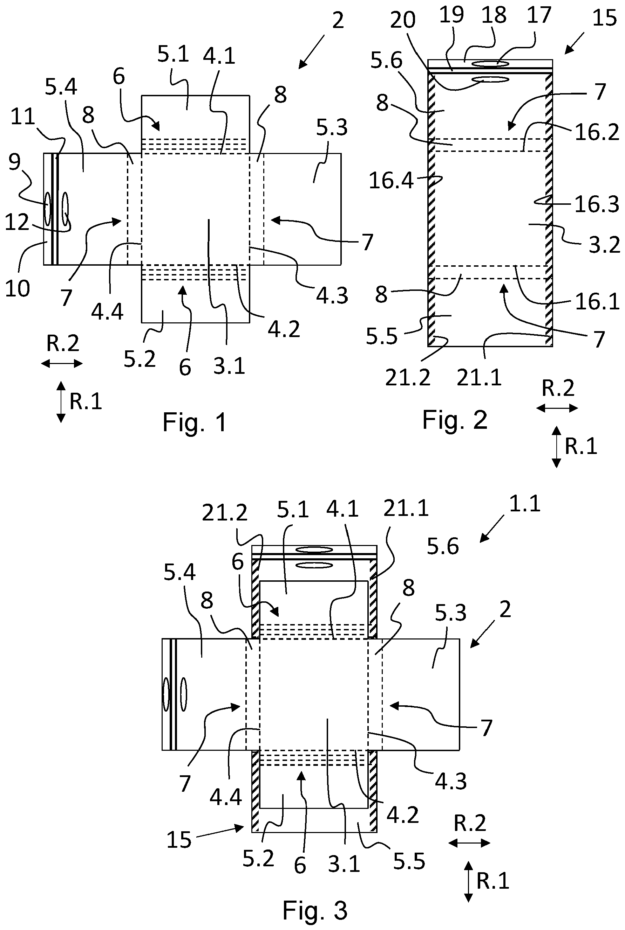

Figur 1 zeigt ein inneres Verpackungselement 2 für eine Faltverpackung nach dem ersten Aspekt der Erfindung. Das innere Verpackungselement 2 umfasst eine rechteckige erste Grundplatte 3.1 mit einer ersten Kante 4.1, einer der ersten Kante 4.1 in einer ersten Richtung R.1 gegenüberliegenden zweiten Kante 4.2, einer dritten Kante 4.3 und einer der dritten Kante 4.3 in einer zweiten Richtung R.2 gegenüberliegenden vierten Kante 4.4. Die Fläche der ersten Grundplatte 3.1 erlaubt die Auflage einer Schallplatte einer üblichen Größe, sodass die Kanten 4.1, 4.2, 4.3, 4.4 nur unwesentlich über die Ränder der Schallplatte hinausragen.

An der ersten Kante 4.1 ist eine erste Lasche 5.1 angeformt, wobei die erste Kante 4.1 mit der ersten Lasche 5.1 eine Mehrfachfalz 6 bildet. Eine jeweilige Falz ist hier und auch bei anderen Kanten 4.1, 4.2, 4.3, 4.4 als gestrichelte Linie dargestellt. Die Mehrfachfalz 6 ist derart ausgebildet, dass die erste Lasche 5.1 auf die erste Grundplatte 3.1 unter Bildung verschieden hoher Seitenflächen gefaltet werden kann, um unterschiedliche Anzahlen an Schallplatten passgenau zu umgreifen. In der gleichen Weise ist an der zweiten Kante 4.2 eine zweite Lasche 5.2 mittels einer Mehrfachfalz 6 angeformt. An der dritten Kante 4.3 ist weiterhin eine dritte Lasche 5.3 angeformt, wobei die dritte Kante 4.3 und die dritte Lasche 5.3 miteinander eine Doppelfalz 7 bilden, sodass beim Umfalten der dritten Lasche 5.3 auf die erste Grundplatte 3.1 eine Seitenfläche 8 einer vorgegebenen Höhe entsteht. Auf die gleiche Weise ist an der vierten Kante 4.4 eine vierte Lasche 5.4 über eine Doppelfalz 7 angeformt.

Das innere Verpackungselement 2 ist hier in einem geöffneten Zustand dargestellt. Zum Schließen des inneren Verpackungselements 2 nach dem Einlegen einer oder mehrerer Schallplatte/n werden zunächst die erste Lasche 5.1 und die zweite Lasche 5.2 nacheinander auf die Schallplatte/n bzw. auf die unter der Schallplatte bzw. den Schallplatten liegende erste Grundplatte 3.1 gefaltet, wobei zum Umfalten eine Falz oder zwei Falze der Mehrfachfalz 7 gewählt werden, sodass eine passgenaue Umschließung der Schallplatte/n und somit eine Fixierung der Schallplatte/n erreicht wird. Anschließend werden die dritte Lasche 5.3 und die vierte Lasche 5.4 auf die erste Lasche 5.1 und die zweite Lasche 5.2 bzw. die darunter liegende/n Schallplatte/n bzw. die darunter liegende erste Grundplatte 3.1 gefaltet. Dabei wird zuerst die dritte Lasche 5.3 gefaltet und anschließend die vierte Lasche 5.4, sodass die vierte Lasche 5.4 auf die dritte Lasche 5.3 aufgelegt wird. Mittels einem Befestigungsmittel 9, das hier als Klebestreifen ausgebildet ist, wird die vierte Lasche 5.4 dann an der dritten Lasche 5.3 befestigt, um das innere Verpackungselement 2 zu verschließen. Das Befestigungsmittel 9 ist an einem äußeren Abschnitt 10 der vierten Lasche 5.4 angeordnet, der über einen beidseitig perforierten Abriss 11 von der vierten Lasche 5.4 und dem Abschnitt 10 getrennt werden kann. Ist die vierte Lasche 5.4 an der dritten Lasche 5.3 befestigt, kann das innere Verpackungselement 2 durch Heraustrennen des Abrisses 11 geöffnet werden. An der Lasche 5.4 ist an einer der ersten Grundplatte 3.1 zugewandten Seite des Abrisses 11 ein weiteres, ebenfalls als Klebestreifen ausgebildetes, Befestigungsmittel 12 vorgesehen, mit dem ein wie vorbeschrieben geöffnetes inneres Verpackungselement 2 abermals verschlossen werden kann.

Figur 2 zeigt ein äußeres Verpackungselement 15 für eine Faltverpackung nach dem ersten Aspekt der Erfindung. Das äußere Verpackungselement 15 weist eine rechteckige zweite Grundplatte 3.2 auf, die derart dimensioniert ist, dass die erste Grundplatte 3.1 darauf angeordnet werden kann, ohne darüber hinauszustehen. Die zweite Grundplatte 3.2 weist eine erste Kante 16.1 und eine der ersten Kante 16.1 in der ersten Richtung R.1 gegenüberliegende zweite Kante 16.2 auf. Die zweite Grundplatte 3.2 weist ferner auch eine dritte Kante 16.3 sowie eine der dritten Kante 16.3 in der zweiten Richtung R.2 gegenüberliegende vierte Kante 16.4 auf. An der ersten Kante 16.1 der zweiten Grundplatte 3.2 ist über eine Doppelfalz 7 eine fünfte Lasche 5.5 angeformt, an der zweiten Kante 16.2 der zweiten Grundplatte 3.2 ist ebenfalls über eine Doppelfalz 7 eine sechste Lasche 5.6 angeformt.

Figur 2 zeigt das äußere Verpackungselement 15 in einem geöffneten Zustand. Zum Schließen des äußeren Verpackungselements 15 wird zunächst die fünfte Lasche 5.5 auf ein auf der zweiten Grundfläche 3.2 aufliegendes inneres Verpackungselement 3.1 gefaltet, wobei wiederum eine Seitenfläche 8 entsteht. Anschließend wird die sechste Lasche 5.6 auf die fünfte Lasche 5.5 gefaltet und mit einem als Klebestreifen ausgebildeten Befestigungsmittel 17 an der fünften Lasche 5.5 zum Verschließen des äußeren Verpackungselements 15 befestigt. Das Befestigungsmittel 17 ist wiederum an einem Abschnitt 18 befestigt, der über einen beidseitig perforierten Abriss 19 an der sechsten Lasche 5.6 verbunden ist, sodass ein verschlossenes äußeres Verpackungselement 15 durch Heraustrennen des Abrisses 19 geöffnet werde kann. Zum Wiederverschließen des äußeren Verpackungselements 15 ist wiederum ein weiteres als Klebestreifen ausgebildetes Befestigungsmittel 20 an der sechsten Lasche 5.6 vorgesehen.

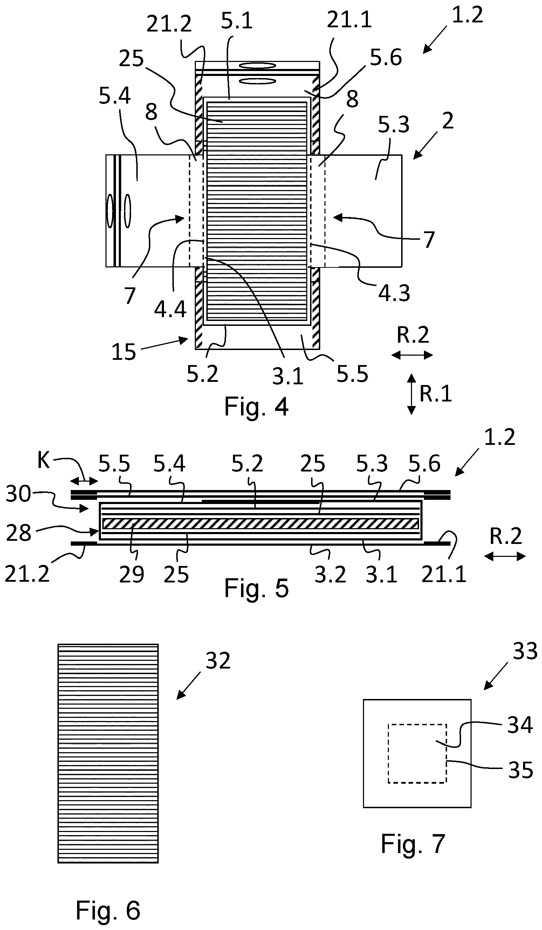

Die zweite Grundplatte 3.2 ist dazu vorgesehen, das innere Verpackungselement 15 aufzunehmen. Dabei sind an sich in der zweiten Richtung R.2 gegenüberliegenden Kanten der zweiten Grundplatte 3.2 sowie der fünften Lasche 5.5 und der sechsten Lasche 5.6 Versteifungen 21.2, 21.2 ausgebildet, die einen Überstand über einer auf der zweiten Grundplatte 3.2 angeordneten ersten Grundplatte 3.1 bildet. Die Versteifungen 21.1, 21.2 sind beispielsweise als Doppellage des Materials des äußeren Verpackungselements 15 durch eine umgefaltete Kante ausgebildet. Durch die Versteifungen 21.1, 21.2 wird im geschlossenen Zustand des äußeren Verpackungselements 15 eine Knautschzone für das innere Verpackungselement 2 gebildet, wie im Folgenden unter Bezug auf Figur 5 noch näher erläutert wird.

Figur 3 zeigt eine Faltverpackung 1.1 mit den in den Figuren 1 und 2 gezeigten Verpackungselementen 2, 15 im geöffneten Zustand. Dabei ist die erste Grundplatte 3.1 mit der zweiten Grundplatte 3.2 verbunden, insbesondere verklebt. Zum Schließen der Faltverpackung 1.1, nachdem eine Schallplatte oder mehrere Schallplatten auf der ersten Grundfläche 3.1 passgenau aufgelegt wurden, wird zunächst das innere Verpackungselement 2 geschlossen. Dazu werden die Laschen 5.1, 5.2, 5.3, 5.4 in der Reihenfolge ihrer hier verwendeten Nummerierung über die Schallplatte/n gefaltet und durch das Befestigungsmittel 9 verschlossen. Dadurch wird bzw. werden die Schallplatte/n durch das allseitige Umgreifen durch die Laschen 5.1, 5.2, 5.3, 5.4 fixiert. Anschließend wird das äußere Verpackungselement 15 geschlossen, indem die Laschen 5.5, 5.6 in der Reihenfolge ihrer hier verwendeten Nummerierung über das innere Verpackungselement 2 gefaltet und mittels dem Befestigungsmittel 17 verschlossen. Durch das äußere Verpackungselement 15 wird ein zusätzlicher Schutz der Schallplatte/n gegenüber Beschädigung, insbesondere beim Versand, erreicht.

Figur 4 zeigt eine Faltverpackung 1.2, die im Wesentlichen der Faltverpackung 1.1 gemäß Figur 3 entspricht. Auf eine wiederholende Beschreibung bereits beschriebener Merkmale wird verzichtet. Die Faltverpackung 1.2 weist zusätzlich ein Fixiermittel 25 auf, das als Wellpappe ausgebildet ist und sich über die erste Grundplatte 3.1, die erste Lasche 5.1 und die zweite Lasche 5.2 erstreckt. Das Fixiermittel 25 ist dabei mit der ersten Grundplatte 3.1 verbunden, beispielsweise verklebt, nicht jedoch mit der ersten Lasche 5.1 oder der zweiten Lasche 5.2. Die Wellen des Fixiermittels 25 folgen in der ersten Richtung R.1 aufeinander, sodass eine oder mehrere in dem Fixiermittel 25 einliegende Schallplatte/n mit ihren Kanten bei Umfalten des Fixiermittels 25 zwischen zwei Wellen eingreift bzw. eingreifen und somit zusätzlich fixiert wird bzw. werden. Ein Fixiermittel 25 kann alternativ beispielsweise auch als anderweitig ausgebildete Strukturpappe oder als Luftpolsterfolie ausgebildet sein, wobei auf ähnliche Weise eine zusätzliche Fixierung der Schallplatte/n erreicht wird.

Fig. 5 zeigt einen schematischen Querschnitt durch eine geschlossene Faltverpackung 1.2 nach Figur 4. Das innere Verpackungselement 2 bildet dabei einen umschlossenen Raum 28, in dem eine oder mehrere Schallplatte/n 29 einliegt bzw. einliegen. Die Schallplatte/n 29 liegen dabei an einer unteren Seite auf dem Fixiermittel 25 und der ersten Grundplatte 3.1 auf und werden an einer oberen Seite von einer oberen Lasche des Fixiermittels 25, der ersten Lasche 5.1 sowie der dritten Lasche 5.3 und der vierten Lasche 5.4 überdeckt. Der Querschnitt ist in einem Bereich dargestellt, in dem die erste Lasche 5.1 und die zweite Lasche 5.2 sowie zwei obere Laschen des Fixiermittels 25 sich nicht überdecken, was jedoch abschnittsweise der Fall sein kann. Das nunmehr beschriebene geschlossene innere Verpackungselement 2 mit darin einliegender/einliegenden Schallplatte/n 29 liegt seinerseits in einem durch das äußere Verpackungselement 15 umschlossenen Raum 30 ein. An einer unteren Seite liegt das innere Verpackungselement 2 auf der zweiten Grundplatte 3.2 des äußeren Verpackungselements 15 auf, wobei es an einer oberen Seite durch die fünfte Lasche 5.5 und die sechste Lasche 5.6 überdeckt wird. Die zweite Grundplatte 3.2, die fünfte Lasche 5.5 und die sechste Lasche 5.6 bilden in der zweiten Richtung R.2 einen Überstand über dem inneren Verpackungselement 2 aus, der eine Knautschzone K bildet. Über diese Knautschzone K erstrecken sich in der zweiten Richtung R.2 auch die als Doppellage ausgebildeten Versteifungen 21.1, 21.2 des äußeren Verpackungselements 15, sodass eine besonders stabile Knautschzone K erreicht wird.

Figur 6 zeigt ein Fixiermittel 32, das als von einer Faltverpackung 1.1 separat ausgebildetes Element vorgesehen ist. Ein solches Fixiermittel 32 entspricht dem Fixiermittel 25 gemäß Figur 4 und kann mit gleicher Wirkung und zum gleichen Zweck in eine Faltverpackung 1.1 eingelegt werden, die kein Fixiermittel 25 aufweist, um ein Faltverpackungssystem zu bilden. Das Fixiermittel 32 kann auch in eine Faltverpackung 1.1 bei Bedarf eingeklebt werden, insbesondere mittels einem nicht dargestellten Befestigungsmittel wie einem Klebestreifen, bevorzugt an der ersten Grundplatte 3.1.

Figur 7 zeigt einen Einlegeboden 33, der in eine Faltverpackung 1.1, 1.2 über und/oder unter der bzw. den Schallplatte/n 29 eingelegt werden kann, um eine Versteifung zu erreichen und die Schalllatte/n 29 insbesondere vor Knicken oder Durchbiegen zu schützen. Der Einlegeboden 33 ist bevorzugt aus einer stabilen Pappe gebildet und weist einen inneren Bereich 34 auf, der entlang einer Perforation 35 aus dem Einlegeboden 33 herausgetrennt werden kann. Bei herausgetrenntem inneren Bereich 34 bildet der Einlegeboden 33 eine Aufnahme für eine Schallplatte eines kleineres Formats als das Format, für das die Faltverpackung 1.1, 1.2 an sich vorgesehen ist. Der Einlegeboden 33 kann dann als Rahmen um eine solche kleiner Schallplatte herumgelegt werden. Beispielsweise kann auf diese Weise eine 7 Zoll Schallplatte in der Faltverpackung 1.1, 1.2 transportiert werden, deren Abmessungen eigentlich für eine 12 Zoll Schallplatte vorgesehen sind. Der innere Bereich 34 kann auch so dimensioniert sein, dass dort eine CD mitsamt ihrer Kunststoffhülle eingelegt werden kann, sodass die Faltverpackung 1.1, 1.2 auch zum Transport von CDs verwendet werden kann, oder Schallplatten 29 und CDs gleichzeitig transportiert werden können.

### Bezugszeichenliste

- 1.1: Faltverpackung
- 1.2: Faltverpackung
- 2: inneres Verpackungselement
- 3.1: erste Grundplatte
- 3.2: zweite Grundplatte
- 4.1: erste Kante der ersten Grundplatte
- 4.2: zweite Kante der ersten Grundplatte
- 4.3: dritte Kante der ersten Grundplatte
- 4.4: vierte Kante der ersten Grundplatte
- 5.1: erste Lasche
- 5.2: zweite Lasche
- 5.3: dritte Lasche
- 5.4: vierte Lasche
- 5.5: fünfte Lasche
- 5.6: sechste Lasche
- 6: Mehrfachfalz
- 7: Doppelfalz
- 8: Seitenfläche
- 9: Befestigungsmittel
- 10: Abschnitt
- 11: Abriss
- 12: Befestigungsmittel
- 15: äußeres Verpackungselement
- 16.1: erste Kante der zweiten Grundplatte
- 16.2: zweite Kante der zweiten Grundplatte
- 16.3: dritte Kante der zweiten Grundplatte
- 16.4: vierte Kante der zweiten Grundplatte
- 17: Befestigungsmittel
- 18: Abschnitt
- 19: Abriss
- 20: Befestigungsmittel
- 21.1: erste Versteifung
- 21.2: zweite Versteifung
- 25: Fixiermittel
- 28: umschlossener Raum des inneren Verpackungselements
- 29: Schallplatte/n
- 30: umschlossener Raum des äußeren Verpackungselements
- 32: Fixiermittel
- 33: Einlegeboden
- 34: innerer Bereich des Einlegebodens
- 35: Perforation
- K: Knautschzone
- R.1: erste Richtung
- R.2: zweite Richtung

## Patentansprüche

1. Faltverpackung (1.1, 1.2) zum Transport von Schallplatten (29), umfassend ein inneres Verpackungselement (2) und ein äußeres Verpackungselement (15);
wobei das innere Verpackungselement (2) aufweist:
- eine rechteckige erste Grundplatte (3.1),
- eine mit einer ersten Kante (4.1) der ersten Grundplatte (3.1) verbundene erste Lasche (5.1),
- eine mit einer der ersten Kante (4.1) der ersten Grundplatte (3.1) gegenüberliegenden zweiten Kante (4.2) der ersten Grundplatte (3.1) verbundene zweite Lasche (5.2),
- eine mit einer dritten Kante (4.3) der ersten Grundplatte (3.1) verbundene dritte Lasche (5.2), und
- eine mit einer der dritten Kante (4.3) der ersten Grundplatte (3.1) gegenüberliegenden vierten Kante (4.4) der ersten Grundplatte (3.1) verbundene vierte Lasche (5.4);
wobei das äußere Verpackungselement (15) aufweist:
- eine rechteckige zweite Grundplatte (3.2),
- eine mit einer ersten Kante (16.1) der zweiten Grundplatte (3.2) verbundene fünfte Lasche (5.5), und
- eine mit einer der ersten Kante (16.1) der zweiten Grundplatte (3.2) gegenüberliegenden zweiten Kante (16.2) der zweiten Grundplatte (3.2) verbundene sechste Lasche (5.6);
wobei die erste Grundplatte (3.1) und die zweite Grundplatte (3.2) aufeinander flächig aufliegen und miteinander verbunden sind;
wobei die Laschen (5.1, 5.2, 5.3, 5.4, 5.5, 5.6) mit den zugeordneten Grundplatten (3.1, 3.2) Falze bilden und zum Umschließen der Schallplatte/n (29) auf die Grundplatten (3.1, 3.2) faltbar sind; und
wobei das äußere Verpackungselement (15) in einem geschlossenen Zustand dazu vorgesehen ist, das geschlossene innere Verpackungselement (2) zu umschließen.

2. Faltverpackung (1.1, 1.2) nach Anspruch 1, wobei in dem inneren Verpackungselement (2) ein Fixiermittel (25) zum Fixieren einer Schallplatte (29) oder mehrerer Schallplatten (29) befestigt, insbesondere verklebt, ist; und
wobei sich das Fixiermittel (25) über die erste Grundplatte (3.1), die erste Lasche (5.1) und die zweite Lasche (5.2) erstreckt und zum Umgreifen der Schallplatte (29) oder Schallplatten (29) vorgesehen ist.

3. Faltverpackung (1.1, 1.2) nach Anspruch 2, wobei das Fixiermittel (25) als Strukturpappe, insbesondere Wellpappe, oder als Luftpolsterfolie ausgebildet ist.

4. Faltverpackung (1.1, 1.2) nach Anspruch 2 oder 3, wobei das Fixiermittel (25) an der ersten Bodenplatte (3.1) befestigt ist.

5. Faltverpackung (1.1, 1.2) nach einem der vorhergehenden Ansprüche, wobei zumindest zwei sich gegenüberliegende Laschen (5.1, 5.2, 5.3, 5.4, 5.5, 5.6), insbesondere zumindest die fünfte Lasche (5.5) und die sechste Lasche (5.6), mit den zugeordneten Grundplatten (3.1, 3.2) Doppelfalze (7) bilden,
wobei zwischen zwei parallelen Falzkanten der Doppelfalze (7) eine Seitenfläche (8) des zugeordneten Verpackungselements (2, 15) ausgebildet ist.

6. Faltverpackung (1.1, 1.2) nach einem der vorhergehenden Ansprüche, wobei das innere Verpackungselement (2) und/oder das äußere Verpackungselement (15) jeweils aus Pappe ausgebildet sind.

7. Faltverpackung (1.1, 1.2) nach einem der vorhergehenden Ansprüche, wobei die erste Grundplatte (3.1) mit der zweiten Grundplatte (3.2) verklebt ist.

8. Faltverpackung (1.1, 1.2) nach einem der vorhergehenden Ansprüche, wobei die erste Lasche (5.1) und die zweite Lasche (5.2) als gegenüber der dritten Lasche (5.3) und der vierten Lasche (5.4) als innenliegende Laschen (5.1, 5.2, 5.3, 5.4) ausgebildet sind.

9. Faltverpackung (1.1, 1.2) nach einem der vorhergehenden Ansprüche, wobei die erste Lasche (5.1) und die zweite Lasche (5.2) sich in einer ersten Richtung (R.1) gegenüberliegen, und wobei die fünfte Lasche (5.5) und die sechste Lasche (5.6) sich ebenfalls in der ersten Richtung (R.1) gegenüberliegen.

10. Faltverpackung (1.1, 1.2) nach Anspruch 9, wobei die zweite Grundplatte (3.2) in der ersten Richtung (R.1) und/oder in einer senkrecht zur ersten Richtung (R.1) verlaufenden zweiten Richtung (R.2) jeweils beidseitig über die erste Grundplatte (3.1) hinausragt.

11. Faltverpackung (1.1, 1.2) nach Anspruch 10, wobei die zweite Grundplatte (3.2), die fünfte Lasche (5.5) und/oder die sechste Lasche (5.6) jeweils an sich in der zweiten Richtung (R.2) gegenüberliegenden Kanten (16.3, 16.4) Versteifungen (21.1, 21.2) aufweisen.

12. Faltverpackung (1.1, 1.2) nach einem der vorhergehenden Ansprüche, wobei zumindest die erste Lasche (5.1) und die zweite Lasche (5.2) jeweils eine Mehrfachfalz (6) mit mehreren zueinander parallelen Falzkanten zum wahlweisen Ausbilden verschieden hoher Seitenflächen des inneren Verpackungselements (2) aufweisen.

13. Faltverpackung (1.1, 1.2) nach einem der vorhergehenden Ansprüche, wobei die zweite Lasche (5.2), die vierte Lasche (5.4) und/oder die sechste Lasche (5.6) jeweils ein Befestigungsmittel (9, 17) zum Verschließen des inneren Verpackungselements (2) oder des äußeren Verpackungselements (15) aufweist, wobei das Befestigungsmittel (9, 17) insbesondere jeweils mittels eines Abrisses (10, 18) von der zweiten Lasche (5.2), der vierten Lasche (5.4) oder der sechsten Lasche (5.6) abtrennbar ausgebildet ist.

14. Faltverpackungssystem mit einer Faltverpackung (1.1, 1.2) nach einem der Ansprüche 1 oder 5 bis 13 und zumindest einem in dem inneren Verpackungselement (2) einlegbaren Fixiermittel (32) zum Fixieren einer Schallplatte (29) oder mehrerer Schallplatten (29), wobei das Fixiermittel (32) dazu vorgesehen ist, sich über die erste Grundplatte (3.1), die erste Lasche (5.1) und die zweite Lasche (5.2) zu erstrecken und die Schallplatte (29) oder Schallplatten (29) zu umgreifen.

15. Faltverpackungssystem mit einer Faltverpackung (1.1, 1.2) nach einem der Ansprüche 1 bis 13 und zumindest einen Einlegeboden (33) zum Unterlegen oder Überdecken von einer oder mehreren in dem inneren Verpackungselement (2) eingelegten Schallplatte (29) oder Schallplatten (29).
